# EUROPÄISCHE PATENTANMELDUNG

(11) **EP 3 543 307 A1**
(43) Veröffentlichungstag der Anmeldung: **25.09.2019**
(21) Anmeldenummer: 19163918.6
(22) Anmeldetag: 19.03.2019
(51) Int. Cl.: C09J 7/26, C09J 7/38

(54) **WIEDERABLÖSBARES SCHAUMKLEBEBAND**

(30) Priorität: 21.03.2018 DE 102018204342
(71) Anmelder: tesa SE, 22848 Norderstedt (DE)
(72) Erfinder: BUCHHOLZ, Christian, 22851 Norderstedt (DE); KLUGE-PALETTA, Werner, 21244 Buchholz Hamburg (DE); SCHLUGER, Semjon, 25474 Bönningstedt (DE)

(57) **Zusammenfassung**

Es soll ein Verfahren zur Trockenverglasung von Fenstern oder Türen unter Einsatz eines Klebebandes ermöglicht werden, wobei zum einen eine hinreichende Klebeperformance realisiert werden und zum anderen für den Fall eines Austauschs der fixierten Glasscheibe ein einfaches und möglichst rückstandsfreies Ablösen des Klebebandes ermöglicht werden soll. Dies gelingt durch die Verwendung eines doppelseitigen Klebebandes, umfassend
a) zwei äußere Haftklebmasseschichten, jeweils enthaltend zu insgesamt mindestens 40 Gew.-% ein oder mehrere Poly(meth)acrylat(e),
b) einen Polymerschaum mit einer Dichte von 30 bis 120 kg/m³, und
c) eine zwischen einer der äußeren Haftklebmasseschichten und dem Polymerschaum angeordnete verstärkende Schicht,
zum Verkleben von Glasscheiben in Fenstern oder Türen.

## Beschreibung

Die Erfindung betrifft das technische Gebiet der Klebebänder, wie sie vielfältig zum temporären oder auch dauerhaften Befestigen verschiedenster Gegenstände und Bauteile verwendet werden. Spezifischer betrifft die Erfindung die Verwendung eines Klebebandes, das einen Polymerschaum mit niedriger Dichte umfasst, zum Verkleben von Glasscheiben in Fenstern und Türen.

Bei der Abdichtung bzw. Fixierung von Glasscheiben in einem zugehörigen Rahmen, beispielsweise einem Fensterrahmen, oder - im Falle einer rahmenlosen Verklebung - auf einer Unterkonstruktion wird generell zwischen der Nass- und der Trockenverglasung unterschieden. Bei der Nassverglasung werden die Scheiben mit Silikon oder Polyurethan abgedichtet, bei der Trockenverglasung mit einem Kunststoffprofil. Wie sich gezeigt hat, lassen sich doppelseitige Klebebänder in Verfahren der Trockenverglasung mit Vorteil einsetzen.

Doppelseitige Klebebänder sind seit langem bekannt. Sie umfassen in der Regel einen Träger, auf dem beidseitig eine Haftklebmasse angebracht ist. Aus verschiedenen Anwendungen sind dabei auch geschäumte Träger bekannt.

Beispielsweise beschreibt WO 2004/067661 A2 ein Haftklebeband mit einem flächigen Trägermaterial, welches beidseitig mit einer Haftklebmasse beschichtet ist, wobei mindestens eine der Haftklebmassen auf Poly(meth)acrylsäureestern basiert.

EP 2 116 584 A1 offenbart ein doppelseitiges Klebeband zur Verklebung von flexiblen Druckplatten, das einen geschäumten und zumindest einen stabilisierenden Träger umfassen kann, wobei zumindest eine der äußeren Haftklebmassenschichten auf Poly(meth)acrylsäureester und einer Harzkomponente basiert und speziell vernetzt ist.

WO 02/11985 A1 beschreibt ein Klebeband für das flexographische Drucken, das eine erste Klebeschicht, ein Substrat, und eine zweite Klebeschicht umfasst, wobei das Substrat eine Schaumstoffschicht umfasst und zumindest eine der Klebeschichten strukturiert ist.

Wie sich gezeigt hat, sind solche, insbesondere aus Verklebungen von Druckplatten bekannten Klebebänder nicht hinreichend für den Einsatz in der Trockenverglasung geeignet. Insbesondere ist entweder die Klebkraft zu niedrig oder das Klebeband lässt sich nicht ohne weiteres rückstandsfrei vom Rahmenelement entfernen.

Aufgabe der vorliegenden Erfindung war es somit, ein Verfahren zur Trockenverglasung von Fenstern oder Türen unter Einsatz eines Klebebandes zu ermöglichen, wobei zum einen eine hinreichende Klebeperformance realisiert werden und zum anderen für den Fall eines Austauschs der fixierten Glasscheibe ein einfaches und möglichst rückstandsfreies Ablösen des Klebebandes ermöglicht werden sollte.

Der Lösung der Aufgabe liegt der Gedanke zugrunde, im Aufbau des Klebebandes einen Schaum mit niedriger Dichte mit einer daran angebrachten verstärkenden Schicht zu kombinieren. Ein erster und allgemeiner Gegenstand der Erfindung ist die Verwendung eines doppelseitigen Klebebandes, das
zwei äußere Haftklebmasseschichten, die jeweils zu insgesamt mindestens 40 Gew.-% ein oder mehrere Poly(meth)acrylat(e) enthalten,
einen Polymerschaum mit einer Dichte von 30 bis 120 kg/m³, und
eine zwischen einer der äußeren Haftklebmasseschichten und dem Polymerschaum angeordnete verstärkende Schicht umfasst
zum Verkleben von Glasscheiben in Fenstern oder Türen.

Bei einem Fenstertausch, beispielsweise nach Glasbruch, wird das zur Trockenverglasung verwendete Klebeband in der Regel mit Hilfe eines Messers mehr oder weniger mittig gespalten. Dabei verbleibt auf dem Fensterrahmen oder der Unterkonstruktion ein Schaumstoffrückstand vom Klebeband. Dieser ließ sich bisher kaum oder nur mit größerem Aufwand rückstandfrei entfernen. Mit dem erfindungsgemäß verwendeten Klebeband wird es möglich, diesen Rückstand einfach und sauber mit der Hand vom Fensterprofil oder der Unterkonstruktion zu entfernen.

Die Verklebung der Glasscheiben mit Hilfe des erfindungsgemäß zu verwendenden Klebebandes kann beispielsweise in Rahmenelementen, z.B. Fenster- oder Türrahmen, oder bei rahmenloser Verklebung auf einer Unterkonstruktion erfolgen.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) • sin(δ) (τ = Schubspannung, γ = Deformation, δ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von 10° bis 10¹ rad/sec sowohl G' als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthalten die Haftklebmasseschichten des erfindungsgemäß verwendeten Klebebandes Poly(meth)acrylat zu insgesamt 50 bis 100 Gew.-%, stärker bevorzugt zu insgesamt 60 bis 99 Gew.-%, jeweils bezogen auf das Gesamtgewicht der Haftklebmasseschicht. Es können ein (einziges) Poly(meth)acrylat oder mehrere Poly(meth)acrylate enthalten sein. Sofern in diesem Text der Pluralausdruck "Poly(meth)acrylate" im Zusammenhang mit den Haftklebmasseschichten des erfindungsgemäßen Klebebandes verwendet wird, ist davon auch immer umfasst, dass die Haftklebmasseschicht nur ein einziges Poly(meth)acrylat enthält.

Bevorzugt lassen sich die Poly(meth)acrylate der Haftklebmasseschichten des erfindungsgemäß verwendeten Klebebandes auf eine Monomerenzusammensetzung bestehend aus
ia) 80 bis 99 Gew.-%, insbesondere 92 bis 99 Gew.-% (bezogen auf die Monomermischung) (Meth)acrylsäureestern CH₂ = CH(R¹)(COOR²),
   worin R¹ für ein H-Atom oder eine Methylgruppe und R² für einen Alkylrest mit 1 bis 20 C-Atomen stehen; und
ib) 1 bis 20 Gew.-%, insbesondere 1 bis 8 Gew.-% (bezogen auf die Monomermischung) (Meth)acrylsäure zurückführen.

Bevorzugt sind die Monomere ia) ausgewählt aus der Gruppe bestehend aus Methylacrylat, Ethylacrylat, Propylacrylat, Methylmethacrylat, Ethylmethacrylat, n-Butylacrylat, sec.-Butylacrylat, tert-Butylacrylat, Cyclopentylmethacrylat, Cyclohexylacrylat, Cyclohexylmethacrylat, Isooctylacrylat, insbesondere 2-Ethylhexylacrylat, Isobornylacrylat, Isobornylmethacrylat, Dodecylmethacrylat, Isodecylacrylat, Laurylacrylat, n-Undecylacrylat, Stearylacrylat. Besonders bevorzugt sind die Monomere ia) ausgewählt aus der Gruppe bestehend aus Methylacrylat, n-Butylacrylat, 2-Ethylhexylacrylat und Isobornylacrylat. Insbesondere sind die Monomere ia) n-Butylacrylat und 2-Ethylhexylacrylat. Das Monomer ib) ist bevorzugt Acrylsäure.

Besonders bevorzugt sind die beiden äußeren Haftklebmasseschichten des erfindungsgemäß verwendeten Klebebandes hinsichtlich ihrer Zusammensetzung identisch.

Die Poly(meth)acrylate der Haftklebmasseschichten des erfindungsgemäß verwendeten Klebebandes sind bevorzugt vernetzt. Als Vernetzer werden insbesondere solche Verbindungen ausgewählt, die in der Lage sind, kovalente, ionische oder koordinative Bindungen aufzubauen. Bevorzugt sind die vernetzenden Bindungen ohne die Zufuhr von aktinischer Strahlung gebildet. Besonders bevorzugt sind die Poly(meth)acrylate der Haftklebmasseschichten mit einem oder mehreren Vernetzern, ausgewählt aus der Gruppe bestehend aus Metallchelaten, insbesondere Aluminium- und Titanchelaten, multifunktionellen Isocyanaten, multifunktionellen Aminen, multifunktionellen Alkoholen oder multifunktionellen Epoxiden vernetzt. Vernetzer können auch in Kombination mit Beschleunigern enthalten sein, also mit Substanzen, welche die Geschwindigkeit der Vernetzungsreaktion erhöhen.

Zur Herstellung der Poly(meth)acrylate der Haftklebmasseschichten des erfindungsgemäß verwendeten Klebebandes können prinzipiell alle radikalischen oder radikalisch-kontrollierten Polymerisationen eingesetzt werden, ebenso auch Kombinationen verschiedener Polymerisationsverfahren. Neben der konventionellen, freien radikalischen Polymerisation sind dies z. B. auch die ATRP, die Nitroxid/TEMPO- kontrollierte Polymerisation oder der RAFT-Prozess.

Die nach den beschriebenen Verfahren hergestellten Haftklebmassen können zur Ausformung der Haftklebmasseschichten des erfindungsgemäß verwendeten Klebebandes aus Lösung oder aus der Schmelze beschichtet werden.

In einer Ausführungsform sind die beiden äußeren Haftklebmasseschichten des erfindungsgemäß verwendeten Klebebandes frei von Klebharzen. Unter "Harzen" werden erfindungsgemäß solche oligo- und (niedrig)polymeren Verbindungen verstanden, deren zahlenmittleres Molekulargewicht Mn nicht mehr als 5.000 g/mol beträgt. "Klebharze" zeichnen sich dadurch aus, dass sie die Klebkraft einer Haftklebmasse im Vergleich zu der ansonsten identischen, nicht mit dem Klebharz abgemischten Haftklebmasse erhöhen. Selbstredend werden kurzkettige Polymerisationsprodukte, die bei der Polymerisation der oben definierten Monomermischung zur Herstellung der Polymerkomponente der Haftklebmasseschichten entstehen, nicht unter den Begriff "Harze" subsumiert.

Die Haftklebmasseschichten können grundsätzlich Additive enthalten, die zur Ausprägung bestimmter Eigenschaften zugesetzt werden. Derartige weitere Additive umfassen z.B. Weichmacher, Füllmaterialien, ggf. auch funktionelle Füllmaterialien, z.B. elektrisch oder thermisch leitfähige Füllmaterialien und Flammschutzmittel. Bevorzugt jedoch bestehen die äußeren Haftklebmasseschichten des erfindungsgemäß verwendeten Klebebandes zu mindestens 95 Gew.-%, besonders bevorzugt zu mindestens 97 Gew.-%, insbesondere zu mindestens 99 Gew.-% aus dem - ggf. vernetzten - Poly(meth)acrylat bzw. den Poly(meth)acrylaten.

Das Auftragsgewicht der Haftklebmasseschichten des erfindungsgemäß verwendeten Klebebandes beträgt bevorzugt 40 bis 120 g/m², stärker bevorzugt 50 bis 100 g/m².

Das erfindungsgemäß verwendete Klebeband umfasst weiter einen Polymerschaum. Darunter wird ein Gebilde aus gasgefüllten, kugel- oder polyederförmigen Zellen verstanden, welche durch flüssige, halbflüssige, höherviskose oder feste Zellstege begrenzt werden und welche in einem solchen Anteil vorliegen, dass die Dichte des Schaums gegenüber der Dichte des Matrixmaterials, also der Gesamtheit der nicht gasförmigen Materialien, aus denen die betreffende Schicht aufgebaut ist, verringert ist.

Das Matrixmaterial des Polymerschaums umfasst insbesondere ein oder mehrere Polymere, bevorzugt besteht es aus einem oder mehreren Polymeren. Die in dem Schaum enthaltenen Polymeren werden in ihrer Gesamtheit als Polymermatrix des Schaums bezeichnet.

Die Polymermatrix des Polymerschaums ist bevorzugt ausgewählt aus der Gruppe bestehend aus Homo- und Copolymeren des Ethylens, insbesondere Polyethylenen (PE) mit niedriger und sehr niedriger Dichte, besonders bevorzugt LDPE, LLDPE und VLDPE; Ethylen-Vinylacetat-Copolymeren (EVA); Gemischen aus den bisher aufgeführten Polymeren, insbesondere PE-EVA-Schäumen; Polyvinylacetaten; Polypropylenen; Ethylen-Propylen-Dien-Kautschuken (EPDM); thermoplastischen Elastomeren auf Basis von Styrolblockcopolymeren; Polyurethanen auf Basis aromatischer und aliphatischer Diisocyanate; Polyvinylchloriden; Polychloroprenen; Naturkautschuk und Acrylatcopolymeren sowie Mischungen aus zwei oder mehreren der vorstehend genannten Polymere. Besonders bevorzugt ist die Polymermatrix des Schaums ausgewählt aus der Gruppe bestehend aus Polyethylenen, Ethylen-Vinylacetat-Copolymeren, Polypropylenen und Polyurethanen sowie Mischungen aus zwei oder mehreren der vorstehend genannten Polymere. Ganz besonders bevorzugt besteht die Polymermatrix des Schaums aus einem Polyethylen, insbesondere einem Low Density Polyethylen (LDPE).

Die Polymere können grundsätzlich vernetzt oder unvernetzt im Schaum vorliegen, bevorzugt sind sie vernetzt.

Das Schäumen der Polymermatrix kann prinzipiell auf jede bekannte Art und Weise erfolgen, beispielsweise mit expandierbaren Mikroballons, mit vorexpandierten Mikroballons oder sonstigen Mikrohohlkugel, chemisch durch Substanzen, die unter Gasfreisetzung reagieren oder physikalisch durch Einbringen eines Treibmittels bzw. Treibgases. Bevorzugt ist der Polymerschaum des erfindungsgemäßen Klebebandes mittels Einbringen eines Treibgases geschäumt.

Die Dichte des Polymerschaums beträgt erfindungsgemäß 30 bis 120 kg/m³. Bevorzugt beträgt die Dichte des Polymerschaums 35 bis 100 kg/m³, stärker bevorzugt 40 bis 90 kg/m³, besonders bevorzugt 50 bis 85 kg/m³, insbesondere 55 bis 80 kg/m³. Die Dicke des Polymerschaums beträgt bevorzugt 500 bis 3000 µm, besonders bevorzugt 800 bis 2000 µm, insbesondere 1100 bis 1800 µm.

Ein erfindungsgemäß verwendetes Klebeband umfasst darüber hinaus eine zwischen einer der äußeren Haftklebmasseschichten und dem Polymerschaum angeordnete verstärkende Schicht. Die Dicke der verstärkenden Schicht beträgt bevorzugt 10 bis 75 µm, stärker bevorzugt 15 bis 50 µm, insbesondere 18 bis 30 µm. Die verstärkende Schicht ist bevorzugt eine Folie, ein Gelege, ein Gewebe oder ein Vlies. Besonders bevorzugt ist die verstärkende Schicht eine Folie, insbesondere eine Polyester-Folie, beispielsweise eine Polyethylenterephthalat-Folie.

Weiter bevorzugt weist die verstärkende Schicht, insbesondere in einer Ausführung als Folie, eine Reißfestigkeit von mehr als 140 N/mm² und eine Reißdehnung von mehr als 60 % auf.

Ein erfindungsgemäß verwendetes Klebeband kann über die bis hierher aufgeführten Schichten hinaus weitere Schichten umfassen. Bevorzugt jedoch besteht das erfindungsgemäß verwendete Klebeband aus
den zwei äußeren Haftklebmasseschichten, die jeweils zu insgesamt mindestens 40 Gew.-% ein oder mehrere Poly(meth)acrylat(e) enthalten,
dem Polymerschaum mit einer Dichte von 30 bis 120 kg/m³, und
der zwischen einer der äußeren Haftklebmasseschichten und dem Polymerschaum angeordneten verstärkenden Schicht.

Schichten geringer Dicke, die lediglich der Erhöhung der Verbundfestigkeit dienen, beispielsweise Primerschichten, sind hierbei unbeachtlich.

Generell kann durch eine Aufrauhung des Polymerschaums eine Verbesserung der Haftklebmassenverankerung erreicht werden. Ein Weg zur Aufrauhung und zur chemischen Modifizierung der Polymerstruktur verläuft über die nasschemische Ätzung des Schaummaterials. Neben der Ätzung kann auch auf andere Weise vorbehandelt werden. So lassen sich zur Verbesserung der Verankerung die Trägermaterialien - also der Polymerschaum und/oder die verstärkende Schicht - physikalisch oder chemisch vorbehandeln. Zur physikalischen Behandlung wird das betreffende Material bevorzugt mit Flamme oder Corona oder Plasma behandelt. Für die chemische Vorbehandlung wird das jeweilige Material bevorzugt mit Vorstrich versehen, wobei in einer besonders bevorzugten Auslegung Reaktiv-Vorstriche verwendet werden. Als Vorstrichmaterialien eignen sich z.B. Reaktivprimer. Besonders bevorzugt ist der Polymerschaum beidseitig Corona-behandelt und die verstärkende Schicht, insbesondere in der Ausführung als Folie, beidseitig geätzt und/oder Corona-behandelt.

Die Gesamtdicke eines erfindungsgemäß verwendeten Klebebandes beträgt bevorzugt 600 bis 3100 µm, stärker bevorzugt 800 bis 2300 µm, insbesondere 1100 bis 2000 µm, ganz besonders bevorzugt 1400 bis 1800 µm.

### Beispiele

### Herstellung der Polyacrylat-Haftklebmasse:

Ein für radikalische Polymerisationen konventioneller 2 L-Glasreaktor wurde mit 236 g 2-Ethylhexylacrylat, 116 g n-Butylacrylat und 48 g Acrylsäure, 150 g Aceton und 150 g Siedegrenzbenzin 60/95 befüllt und gut vermischt. Nach 45minütigem Durchleiten von Stickstoffgas unter Rühren wurde der Reaktor mittels eines äußeren Heizbades auf 58 °C (Innentemperatur) hochgeheizt und es wurden 0,16 g 2,2'-Azodi(2-methylbutyronitril) (Vazo 67) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 Stunde Reaktionszeit wurden weitere 0,24 g 2,2'Azodi(2-methylbutyronitril) gelöst in 10 g Aceton hinzugegeben. Nach 3 Stunden Gesamtreaktionszeit wurde mit 45 g Aceton und 45 g Siedegrenzbenzin 60/95 verdünnt. Nach 5 Stunden und 30 Minuten Gesamtreaktionszeit wurden 0,60 g Bis-(4-tert-Butylcyclohexanyl)-Peroxydicarbonat gelöst in 10 g Aceton hinzugegeben. Nach 7 Stunden Gesamtreaktionszeit wurden weitere 0,60 g Bis-(4-tert-Butylcyclohexanyl)-Peroxydicarbonat gelöst in 10 g Aceton hinzugegeben. Nach 10 Stunden Gesamtreaktionszeit wurde mit 45 g Aceton und 45 g Siedegrenzbenzin 60/95 verdünnt. Die Reaktion wurde nach 24 Stunden Gesamtreaktionszeit abgebrochen und auf Raumtemperatur abgekühlt.

Die wie vorstehend beschrieben erhaltene Polymerlösung wurde mit 0,6 g Polypox R16 (Epoxid-Vernetzer) abgemischt, auf einen Feststoffgehalt von 30 % eingestellt, auf ein temporäres Trägermaterial aufgebracht und getrocknet. Die Schichtdicke nach dem Trocknen betrug 75 µm.

### Herstellung des Klebebandes:

Auf eine 23 µm dicke, geätzte Polyethylenterephthalatfolie (PET) wurde einseitig ein Polyurethan-Reaktivprimer (10 g/m²) aufgebracht und auf die derart vorbehandelte Oberfläche ein Schaumträger (LDPE-Schaum mit einer Dicke von 1500 µm und einem Raumgewicht von 67 kg/m³) laminiert.

Die beiden freien Seiten des Laminats wurden Corona-behandelt (Dosis 80 Wmin/m²; Prozessgas Luft, Bahngeschwindigkeit 30 m/min, Abstand der Elektroden zur zu behandelnden Oberfläche 1 mm). Die wie vorstehend hergestellte Haftklebmasse wurde beidseitig mit Hilfe eines Walzen-Auftragswerks aufkaschiert. Das so erhaltene Klebeband wurde auf der Seite der PET-Folie mit einem silikonisierten Glassine-Papierliner versehen, aufgerollt und vier Wochen bei 23 °C +/- 1 °C und 50 % +/- 5 % rel. Luftfeuchte gelagert.

Testmethoden

### Bruchdehnung (Bruchspannung), Bruchfestigkeit (Reißfestigkeit):

Die Bruchdehnung (Bruchspannung) und Bruchfestigkeit (Reißfestigkeit) wird gemäß PSTC-131 Stand 05/07 Prozedur A unter Verwendung eines Probestreifens des Klebebands, Probekörper Typ 2, mit einer Breite von 20 mm bei einer Separationsgeschwindigkeit von 300 +/- 30 mm pro Minute gemessen. Der Anfangsabstand der Einspannklemmen beträgt 100 mm.

### 90° Klebkraft Stahl:

Zur Bestimmung der 90° Klebkraft auf Stahl werden die Prüfmuster (Klebebänder) auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Musters wird dann mit einer 50 µm Aluminiumfolie abgedeckt, wodurch verhindert wird, dass sich das Muster bei der Messung dehnt. Danach erfolgt das Anrollen des Musters auf den Stahluntergrund. Hierzu wird das Muster mit einer 2 kg - Rolle fünfmal hin und her bei einer Aufrollgeschwindigkeit von 10 m/min überrollt. Sofort ("initial") oder 72 h ("ultimativ") nach dem Anrollen wird die Stahlplatte in eine spezielle Halterung geschoben, die es ermöglicht, das Muster in einem Winkel von 90° senkrecht nach oben abzuziehen. Die Klebkraftmessung erfolgt dann mit einer Zwick-Zugprüfmaschine. Beim Applizieren der abgedeckten Seite auf die Stahlplatte wird die offene Seite des Musters zunächst gegen die 50 µm Aluminiumfolie kaschiert, das Trennmaterial entfernt und auf die Stahlplatte geklebt, analog angerollt und vermessen.

Die Messergebnisse sind für offene ("off. S.") und abgedeckte ("abged. S.") Seite in N/cm angegeben und sind gemittelt aus drei Messungen.

### Anwendungstest auf Entfernbarkeit von Rückständen:

Hierzu wurde eine handelsübliche Fensterglasscheibe im Wege einer Trockenverglasung mit dem jeweiligen Klebeband in einem PVC-Rahmen verklebt. Der so erhaltene Verbund wurde zwei Wochen bei Normklima gelagert.

Anschließend wurde die Fensterscheibe wieder aus dem Rahmen entfernt. Dies geschah, indem mit einer Klinge durch den Schaum geschnitten und anschließend die Scheibe aus dem Rahmen gelöst wurde. Dabei blieb ein Schaumrest am Fensterrahmen kleben, der anschließend händisch - und somit auf einfache Weise - entfernt werden sollte. Bewertet wurde, ob sich dies rückstandsfrei durchführen ließ (ja/nein).

### Die Ergebnisse sind in Tabelle 1 angegeben.

### Eingesetzte Klebebänder

| | |
|---|---|
| Beispiel 1: | erfindungsgemäßes Klebeband, hergestellt wie vorstehend beschrieben; Dicke 1650 µm |
| Beispiel 2 (Vgl.): | Klebeband, hergestellt wie vorstehend beschrieben, aber ohne PET-Folie und Primer, d.h. die Haftklebmassen wurden nach CoronaBehandlung beidseitig auf den Schaumträger aufgebracht; Dicke 1600 µm |
| Beispiel 3 (Vgl.): | kommerziell erhältliches Klebeband DuploColl® 56002 (Lohmann); Dicke 1300 µm |
| Beispiel 4 (Vgl.): | kommerziell erhältliches Klebeband Pro 70 (Vito); Dicke 1200 µm |

**Tabelle 1: Testergebnisse**

| Nr. | Bruchfestigkeit [N/cm] | Bruchdehnung [%] | Klebkraft Stahl (ASTM) initial off. S./abged. S. [N/cm] | | Klebkraft Stahl (ASTM) ultimativ off. S./abged. S. [N/cm] | | Entfernbarkeit der Rückstände |
|---|---|---|---|---|---|---|---|
| 1 | 48,6 | 95 | 3,4 a | 18,9 fs | 3,9 a | 20,4 fs | ja |
| 2 (Vgl.) | 17,2 | 380 | 20,9 Mb | 19,8 Mb | 20,3 fs | 21,7 fs | nein |
| 3 (Vgl.) | 17,5 | 370 | 7,1 a | 7,7 a | 40,1 Mb | 34,3 Mb | nein |
| 4 (Vgl.) | 31,2 | 1105 | 3,3 a | 2,9 a | 13,5 a | 14,0 a | nein |

| | | | | | | | |
|---|---|---|---|---|---|---|---|
| Vgl. - Vergleichsbeispiel | | | | | | | |

## Patentansprüche

1. Verwendung eines doppelseitigen Klebebandes, umfassend
a) zwei äußere Haftklebmasseschichten, jeweils enthaltend zu insgesamt mindestens 40 Gew.-% ein oder mehrere Poly(meth)acrylat(e),
b) einen Polymerschaum mit einer Dichte von 30 bis 120 kg/m³, und
c) eine zwischen einer der äußeren Haftklebmasseschichten und dem Polymerschaum angeordnete verstärkende Schicht,
zum Verkleben von Glasscheiben in Fenstern oder Türen.

2. Verwendung gemäß Anspruch 1, **dadurch gekennzeichnet, dass** die beiden äußeren Haftklebmasseschichten frei von Klebharzen sind.

3. Verwendung gemäß mindestens einem der vorstehenden Ansprüche, **dadurch gekennzeichnet, dass** die beiden äußeren Haftklebmasseschichten hinsichtlich ihrer Zusammensetzung identisch sind.

4. Verwendung gemäß mindestens einem der vorstehenden Ansprüche, **dadurch gekennzeichnet, dass** die Dichte des Polymerschaums 40 bis 90 kg/m³ beträgt.

5. Verwendung gemäß mindestens einem der vorstehenden Ansprüche, **dadurch gekennzeichnet, dass** die Polymermatrix des Polymerschaums ausgewählt ist aus der Gruppe bestehend aus Polyethylenen, Ethylen-Vinylacetat-Copolymeren, Polypropylenen und Polyurethanen sowie Mischungen aus zwei oder mehreren der vorstehend genannten Polymere.

6. Verwendung gemäß mindestens einem der vorstehenden Ansprüche zur Verklebung von Glasscheiben in Rahmenelementen von Fenstern oder Türen.
